# EUROPEAN PATENT APPLICATION

(11) **EP 3 756 517 A1**
(43) Date of publication of application: **30.12.2020**
(21) Application number: 20181677.4
(22) Date of filing: 23.06.2020
(51) Int. Cl.: A47J 31/46, A23F 5/26

(54) **WATER BOILER FOR DISPENSING UNITS OF ESPRESSO COFFEE MACHINES**

(30) Priority: 25.06.2019 IT 201900010056
(71) Applicant: Gruppo Cimbali S.p.A., 20082 Binasco (MI) (IT)
(72) Inventor: Mosconi, Claudio, 20082 Binasco MI (IT)
(74) Representative: Perani & Partners S.p.A.

(57) **Abstract**

A water boiler for dispensing units of espresso coffee machines. It is composed of a first hollow body (2) having an upper end (12) and a lower end (3), in which conventional means are placed for attaching and detaching a portafilter (4), the latter being operable via a handle (5).

The boiler comprises a second hollow body (11) sealingly connected to the upper end (12) of the first body (2), and an electric heating serpentine resistor (13) accommodated in the cavities (9, 10) formed by the two hollow bodies (2, 11). A bottom wall (16) adjacent to the lower end (3) of the first body (2) has a plurality of ducts (22, 23, 24, 25, 29) which are part of the hydraulic circuit of the dispenser unit for supplying the beverage-forming hot water to the dose of pressed coffee contained in the filter.

The boiler includes a tubular element (19), having a predetermined volume capacity, inserted in at least one (25) of the plurality of ducts that are part of said hydraulic circuit for supplying hot water to the dose of coffee. This tubular element acts as a pre-infusion chamber for the dose of coffee and is removably mounted in said bottom wall (16) of said first body (2), to be able to be replaced with another one having a different capacity.

## Description

### Technical field

The present invention relates to a water boiler having a chamber incorporated therein for preliminary hot water infusion of the dose of ground coffee pressed in a portafilter of a dispenser unit of an espresso machine, immediately before dispensing of the beverage.

### Background art

In the field of espresso coffee machines, the temperature and pressure of the beverage-forming water, as well as the management of pressurized hot water by the dispenser units of the machine, are known to have a very important role in preserving the organoleptic properties of the beverage.

According to a well-established known technology, the hot water supplied to the dispensers is derived from a heat exchanger, immersed in a steam and hot water generator, that is shared by all the dispensers, and only reaches the portafilter and eventually the dose of ground coffee, after flowing through chamber, known as pre-infusion chamber, arranged at each dispenser unit.

With this pre-infusion chamber, when beverage formation is requested using a particular button on the user interface, the coffee powder pressed in the filter is soaked in each dispenser.

The ground coffee in the filter is conventionally compressed with a force that ranges from 15kg/cm2 to 20 kg/cm2 and pre-infusion takes place to full dispersion of water in the dose before the hot water being supplied is exposed to the thrust pressure of the electric pump, normally set to about 9 bar, and causes the beverage to be dispensed.

In practice, the presence of a pre-infusion chamber has been found to be actually necessary otherwise, upon actuation of the button for selecting the dispenser to form the beverage, said button also actuating the electric pump that sends cold water to the boiler, the pressure of the hot water that reaches the coffee dose panel, in the filter of the selected dispenser, would almost immediately reach the operating value and the beverage would be dispensed immediately. As a result, the dispensed beverage would be dispensed with insufficient crema and a light body, which are unpleasant conditions for an expert consumer.

It was also found, in practice, that the amount of hot water that reaches the filter to wet the ground coffee panel during the pre-infusion step and its temperature, normally maintained at 93°C, are additional key parameters to provide a beverage that is deemed to be optimal by the consumer and should be reproducibly proposed even through frequent dispensing operations.

Therefore, in order to ensure constant temperature in each dispenser unit, dispenser units equipped with respective water heaters have also been provided in the prior art, to avoid heat dissipation and water temperature decrease.

### Problem of the prior art

The provision of the boiler at each dispenser unit creates construction and design problems which have led to omit a pre-infusion chamber on board each dispenser unit in the prior art, thereby causing the beverage to suffer from the inconveniences derived from failed pre-infusion of the ground coffee panel.

The need to adapt the intensity of the pre-infusion of the coffee panel pressed in the filter to the quality of the coffee mixture in use and the pressing mode is a further problem of the prior art, because the infusion chamber, which has a fixed volume, when formed in the circuit that supplies hot water to the dispenser units, is not able to meet it.

### Object of the invention

Therefore, the object of the invention is to act on the supply of hot water to the beverage dispenser units of an espresso coffee machine to obviate the above discussed drawbacks of the prior art.

Namely, the object of the present invention is to provide the circuit for supplying hot water to the individual dispenser units with respective pre-infusion chambers having a predetermined volume, the latter being adapted to the desired degree of infusion to be attained in the pressed coffee panel in the filter, by further positioning said chamber inside the water boiler associated with each dispenser unit of the machine.

### Advantages of the invention

The advantage achieved by the invention consists in obtaining a beverage with a high organoleptic quality which is consistent over time even with a high operating rate, because each dispenser unit is supplied using its own boiler and its own pre-infusion chamber, without changing the compact structure and design of the dispenser unit with respect to that of a conventional coffee machine.

These and other objects, as better explained hereafter, are fulfilled by a boiler according to the invention as characterized by claim 1 hereinafter.

### Brief Description of the Drawings

The invention will be now described in greater detail with reference to certain practical embodiments, given by way of illustration and without limitation, and shown in the annexed drawings, in which:
- Figure 1 shows a schematic, partially vertically sectional view of a dispenser unit of an espresso coffee machine, with an associated boiler having a pre-infusion chamber and a corresponding portafilter attached thereto;
- Figure 2 shows an exploded perspective view of the dispenser unit with its own portafilter as shown in Figure 1;
- Figure 3 shows a sectional view of the boiler with its infusion chamber as shown in Figure 1, in one embodiment with a replaceable pre-infusion chamber;
- Figure 4 shows a sectional view of the boiler alone with its infusion chamber as shown in Figure 1, in the embodiment with a pre-infusion chamber having an adjustable volume

### Detailed description

Referring to the aforementioned figures, numeral 1 generally designates a dispenser unit of an espresso coffee machine, not shown, and numeral 2 designates a first hollow body whose lower end 3 is equipped with conventional means for attaching and detaching the portafilter 4, which can be operated via the handle 5.

As is known in the art, the portafilter 4 accommodates the filter 6, which is adapted to contain a dose of ground coffee, pressed in certain manners to form a panel from which the beverage is brewed and flows out of the portafilter 4 through the channel 7 and the dispensing spout 8 into a collecting cup, not shown.

The cavity of the first hollow body 2 has been referenced 9 and is in communication with another cavity, referenced 10, of a second hollow body 11 extending in tubular form 12.

A coil-shaped heating resistor 13 is accommodated in the cavities 9 and 10, and has power terminals 14 extending out of the second hollow body 11, through a pair of openings 15.

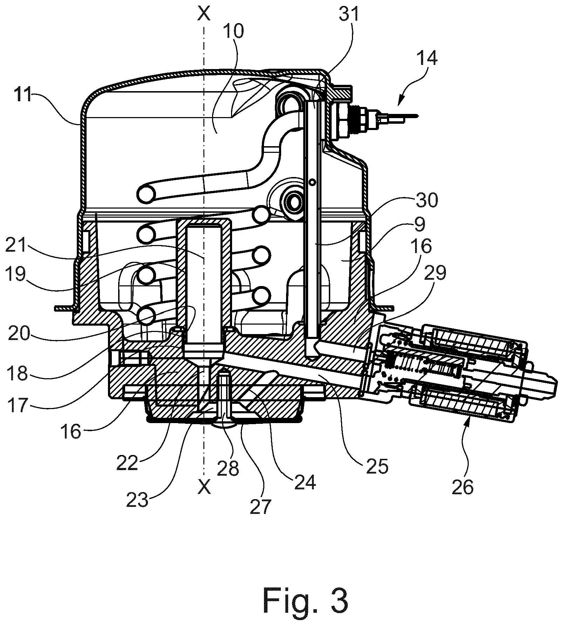

The first hollow body 2, as best shown in the section of Figure 3, has a bottom wall 16 with an opening 17 formed therein, with an inner wall having a thread 18, in which a hollow tubular element 19 is introduced, with an end 20 engaged with the thread 18 of the opening 17.

The aforementioned tubular element 19 axially extends inside the cavity 9 of the first hollow body 2 along the vertical axis referenced X-X in the drawings, toward the chamber 10 of the second hollow body 11, where it is closed by the bottom wall 19a, coaxially with the heating coil 13.

The second hollow body 11 is connected to the first hollow body 2 by engagement of its tubular form 12 on the collar 160 of the bottom wall 16, with the interposition of a sealing gasket 161.

It will be appreciated from the above that, after removal of the second hollow body 11, the hollow tubular element 19 can be accessed by an operator and removed from its threaded seat 18 to be replaced with another element that has the same size at the end 20 for engagement with the thread 18 of the opening 17, but a different volume capacity of the axial cavity 21 of its interior.

Passages are formed in the same bottom wall 16 of the hollow body 2, specifically a first channel 22, connecting the opening 17 with the cavity 23, a second channel 24 which extends from the same cavity 23 and intersects a third channel 25 which extends from a valve assembly 26, whose function will be described later on, and reaches the opening 17.

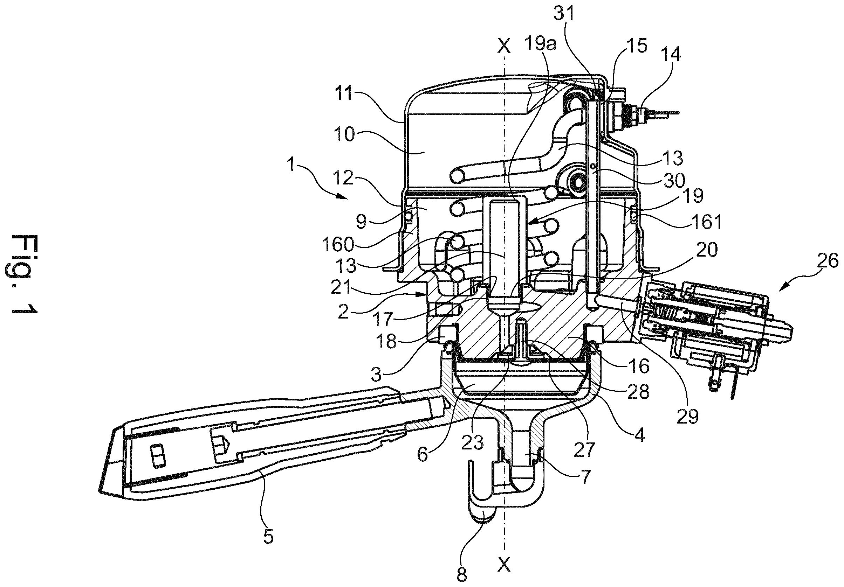

As shown in Figures 1 and 3, the cavity 23 is located over the filter 6 and the portafilter 4 and is covered by a shower-like plate having holes formed therein referenced 27, fixed by means of a screw 28 which engages in the bottom wall 16.

The shower-like plate 27 delivers hot water into the ground coffee panel of the dose in the filter 6, as explained hereinafter, from the channels 23 and 24.

A fourth channel 29, also formed in the wall 16, extends from the valve assembly 26 and connects to the duct 30 which extends into the cavities 9 and 10 and ends with an opening 31 in communication with the interior of the cavity 10.

A connector, not shown in the drawings, is provided to connect, in a conventional manner, the interior of the cavities 9 and 10 to the hydraulic circuit of the machine.

A push-button on the user interface, when actuated, controls a conventional electric pump which delivers cold water at a predefined operating pressure into the aforementioned cavities 9 and 10, when the beverage is required to be dispensed to the particular dispenser unit, like the one referenced 1 in Figure 1. The water in the aforementioned cavities is heated by means of the heating coil 13 and maintained at the prescribed operating temperature of about 93°C.

Therefore, the cavities 9 and 10 and the resistor 13form a water heater, or boiler, dedicated to the specific dispenser unit 1.

Such boiler, which also has a special removable tubular element 19 that forms a cavity 21, is thus also equipped with a pre-infusion chamber, specifically dedicated to the dose of pressed coffee in the filter 4, said cavity 21 having a predetermined volume capacity.

Thus, once the dispenser unit 1 has been give the order to dispense the beverage, assuming that the machine is in a steady state, the amount of cold water introduced into the chambers 9 and 10 causes a corresponding outflow of hot water into the channel 30 and delivery thereof from the latter, via the valve assembly 26, through the shower head 27, to the coffee panel located in the filter 4, thereby performing initial wetting, via the ducts 24 and 25, the cavity 21 and the channel 22.

The step of wetting the dose of coffee continues until the pre-infusion chamber 21 and the ducts 22, 24, 25, are completely filled with the water, whereupon, as free outflow toward the coffee dose panel is stopped, pressure automatically increases to the conventional beverage-dispensing value of 9 bar.

It will be appreciated from the foregoing that the time for wetting the pressed coffee panel may be modified by varying the volume of the pre-infusion chamber 21, for example, by replacing the tubular element 19 that forms it.

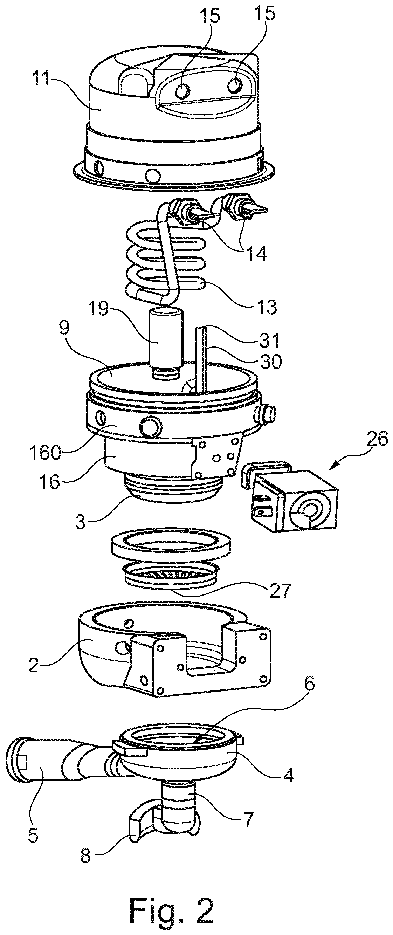

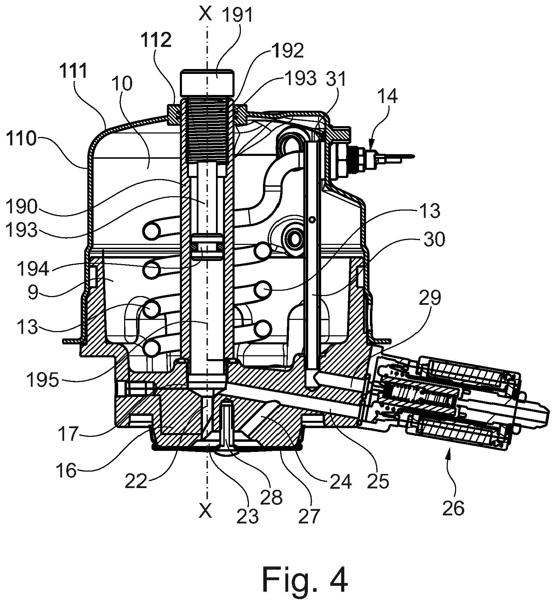

An alternative to the technical solution of Figures 1, 2 and 3 may be the embodiment of Figure 4, in which the tubular element 19 is replaced with an equivalent tubular element 190 that extends in the second hollow body 110 and out of the upper wall 111, with the interposition of an appropriate sealing gasket 112.

The tubular element 190 comprises a mechanism for varying its volume capacity. This mechanism comprises a knob 191 which is connected to a threaded stem 192 engaged with a mating thread 193 formed in the inner wall of the tubular element 190. The threaded stem 192 extends inside the tubular element 190, with a rod 193 that ends with a plate 194 that slides in the tubular element 190 with a radial seal. A manual action on the knob 191 may change and select the volume of the chamber 195 under the plate 194, i.e. the volume of the pre-infusion chamber, in response to the operation requirements, without disassembling the water boiler.

## Claims

1. A water boiler, for dispenser units of espresso coffee machines comprising a first body (2) having an upper end (160) and a lower end (3), said body also having a cavity (9), conventional means for attaching and detaching a portafilter (4), operable via a handle (5), which are located in said lower end (3), a second body (110) having a cavity (10) and sealingly connected to the upper end (12) of the first body (2), an electric heating serpentine resistor (13) accommodated in said cavities (9, 10) of said first and said second bodies (2, 110), the terminals (14) for power supply to said serpentine resistor (13) coming out of the cavity (10) of said second body (110), a bottom wall (16) adjacent to said lower end (3) of said first body (2), a plurality of ducts (22, 23, 24, 25, 29) formed in said bottom wall (16) and being part of the hydraulic circuit of the dispenser unit for supplying the beverage-forming hot water to the dose of pressed coffee contained in the filter, the boiler including a tubular element (190), having a first end (20), a second end and a predetermined volume capacity, the tubular element (190) being inserted in at least one (25) of the plurality of ducts that are part of said hydraulic circuit for supplying hot water to the dose of coffee, said tubular element (190) acting as a pre-infusion chamber for the dose of coffee and having its first end (20) removably mounted in an opening (17) of said bottom wall (16) of said first body (2), **characterized in that** said tubular element (190) axially extends in the cavity (10) of said second body (110), the second end of said tubular element sealingly reaching beyond the top wall of said second body (110), said second end being further configured to comprise a control and adjustment member (191,192) for controlling and adjusting the axial movement of a plate (194) that is slidingly housed in said tubular element (190), said plate (194) being adapted to form an underlying compartment (195) in said tubular element (190), having a variable volume capacity.

2. A water boiler as claimed in claim 1, wherein said control member (191,192) comprises a knob (191) and a rod (193) that ends with said plate (194).

3. A boiler as claimed in claim 2, wherein said control member (191, 192) comprises a threaded stem (192) between said knob (191) and said rod (193), the threaded stem (192) being engaged with a mating thread (193) formed in the inner wall of the tubular element (190).

4. A boiler as claimed in any of claims 1 to 3, wherein the plate (194) is slidable in the tubular element (190) with a radial seal.
